# EUROPÄISCHE PATENTSCHRIFT

(11) **EP 1 149 218 B1**
(45) Veröffentlichungstag und Bekanntmachung des Hinweises auf die Patenterteilung: **12.05.2004**
(21) Anmeldenummer: 00910661.8
(22) Anmeldetag: 10.02.2000
(51) Int. Cl.: E04H 17/14, A01G 1/08

(54) **PALISADE**
PALISADE
ELEMENT DE PALISSADE

(30) Priorität: 12.02.1999 DE 29902467 U; 10.07.1999 DE 29912038 U; 02.09.1999 DE 29915545 U
(43) Veröffentlichungstag der Anmeldung: 31.10.2001
(73) Patentinhaber: Berding Beton GmbH, 49439 Steinfeld (DE)
(72) Erfinder: SCHMITZ, Michael, D-77836 Rheinmünster (DE)
(74) Vertreter: Lasch, Hartmut Dipl.-Ing.
(86) Internationale Anmeldenummer: PCT/EP2000/001059
(87) Internationale Veröffentlichungsnummer: WO 2000/047846

(56) Entgegenhaltungen:
- DE-A- 2 753 086
- DE-A- 19 713 037
- DE-U- 29 715 696
- US-A- 5 154 032

## Beschreibung

Die Erfindung betrifft eine stabförmige Palisade gemäß dem Oberbegriff des Anspruchs 1.

Die Aneinanderreihung von in den Erdboden vertikal eingegrabenen oder in sonstiger Weise festgelegten Palisaden bzw. Pfählen zur Bildung von Wänden oder Mauern ist seit langem bekannt. Während die Palisaden ursprünglich als Schutzwälle dienten, finden sie heute insbesondere bei der Gestaltung von Gärten und Außenanlagen, beispielsweise bei Hochbeeten, Hangabstützungen, Terrassierungen etc. Verwendung. Die Palisaden bestehen in der Regel aus Holz oder Beton und werden im Erdboden in einem Betonfundament eingespannt. Wenn nur sehr geringe Belastungen auf die Palisaden einwirken, kann es auch ausreichen, diese lediglich in den Erdboden einzugraben.

Im folgenden soll zunächst beispielhaft von einer aus nebeneinander angeordneten Palisaden gebildeten Wand ausgegangen werden, die entweder freistehend oder zumindest einseitig mit Erdboden hinterfüllt sein kann.

Während früher in der Regel Holzstämme als Palisaden verwendet wurden und diese deshalb einen im wesentlichen kreisförmigen Querschnitt besaßen, werden Palisaden heutzutage meistens als Beton-Fertigteile hergestellt, was es ermöglicht, die Palisaden in der Formgebung ihres Querschnitts entsprechend den gestellten Anforderungen auszugestalten. Eine derartige Palisade besitzt üblicherweise auf zwei entgegengesetzten Seiten angeordnete Sicht- oder Wandflächen, die zusammen mit den entsprechenden Sicht- oder Wandflächen benachbarter Palisaden im aufgestellten Zustand die Oberflächen der Wand bilden. An den Enden der Sicht- oder Wandflächen der Palisade ist jeweils eine Stirnseite ausgebildet, die im wesentlichen senkrecht zu den Sicht- oder Wandflächen verläuft. Bei der Aneinanderreihung der Palisaden werden benachbarte Palisaden mit ihren aneinander zugewandten Stirnseiten in Anlage gebracht.

Die Standfestigkeit jeder einzelnen Palisade wird durch die Einbettung im Erdboden erreicht. Um örtlich begrenzt auftretende, im wesentlichen senkrecht zur Wandebene gerichtete Kräfte besser aufnehmen zu können, ist es bekannt, nebeneinander angeordnete Palisaden miteinander zu verbinden oder in Eingriff zu bringen, so daß Querlasten, die auf eine Palisade einwirken, auch auf benachbarte Palisaden übertragen und von diesen mit abgeleitet werden, so daß die Standfestigkeit der Wand erhöht ist.

Der gegenseitige Eingriff benachbarter Palisaden wird üblicherweise dadurch erreicht, daß auf den Stirnseiten der Palisaden Eingriffselemente vorgesehen sind. Es ist bekannt (DE 297 15 696 U1, US 1 502 438) auf der einen Stirnseite einen sich im wesentlichen über die gesamte Breite der Stirnseite erstreckenden, zentrisch ausgerichteten Kopf mit teilkreisförmiger, konvexer Gestalt auszuformen und auf der entgegengesetzten Stirnseite eine Aufnahme in Form einer teilkreisförmigen konkaven Hohlkehle auszubilden, die sich ebenfalls über die gesamte Breite der Stirnseite erstreckt. Da der Kopf in verschiedenen Positionen innerhalb der Aufnahme angeordnet sein kann, ist zwischen benachbarten Palisaden eine Art Gelenk mit vertikaler Gelenkachse gebildet, das es ermöglicht, zwischen benachbarten Palisaden eine Abwinkelung auszugestalten, so daß auch polygonartig gekrümmte Wände gebildet werden können.

Es hat sich jedoch gezeigt, daß die Gestaltungsmöglichkeiten mit den bekannten Palisaden relativ begrenzt sind und optische Nachteile besitzen. Dies ist insbesondere darin begründet, daß sich aufgrund des auf der Stirnfläche vorstehenden Kopfes, der gegenüber den Sicht- oder Wandflächen durch beiderseitige Einschnürungen deutlich abgesetzt ist, keine glatte, durchgehende Wandfläche ausbilden läßt. Dabei sind durch die Unterteilung der Palisadenwandfläche in Korpus, Einschnürung und Kopf auf der Wandoberfläche einer Palisadenwand eine Vielzahl von Nischen gebildet, die eine optisch ungleichmäßige Oberfläche darstellen. Darüber hinaus ist aufgrund der Nischen im Fußbereich der Palisadenwand keine geradlinige Kante für den Anschluß von Bodenplatten gebildet, so daß im Übergang zwischen der Wand- und der Bodenfläche Spalten gebildet sind, die zur Verschmutzung und Vermoosung bzw. Verkantung neigen.

In der DE 27 53 086 A1 ist ein Mauerbaustein beschrieben, der aus zwei an ihren Mantelflächen aneinanderstoßenden Hohlzylindern besteht und auf seiner einen Außenseite im wesentlichen eben ausgebildet ist. Auf einer Stirnseite ist eine Ausnehmung vorgesehen, die mit einem benachbarten Mauerbaustein in Eingriff treten kann, um zwischen den Bausteinen eine Verbundwirkung zu erzielen. Um eine Wand oder Mauer zu bilden, werden eine Vielzahl von entsprechenden Mauerbausteinen schichtweise aufeinandergelegt, wobei übereinander angeordnete Mauerbausteine über Zähne in Eingriff treten, die in Ausnehmungen eingreifen. Darüber hinaus werden die Mauerbausteine der einzelnen Schichten in bekannter Weise relativ zueinander versetzt angeordnet. Auf diese Weise sollen Mauer hoher Standfestigkeit erreicht werden. Eine Palisade der genannten Art ist in der DE 27 53 086 A1 jedoch nicht beschrieben oder gezeigt.

Der Erfindung liegt die Aufgabe zugrunde, eine stabförmige Palisade der genannten Art zu schaffen, mit der die vorgenannten Probleme vermieden sind und die dem Benutzer aufgrund ihrer konstruktiven Ausgestaltung eine Vielzahl von Gestaltungsmöglichkeiten für den Aufbau einer Wand ermöglicht.

Diese Aufgabe wird erfindungsgemäß durch eine Palisade mit den Merkmalen des Anspruchs 1 gelöst.

Die erfindungsgemäße Palisade ist auf ihren beiden Sicht- oder Wandflächen unterschiedlich ausgestaltet. Auf einer 1. Sicht- oder Wandfläche ist eine sich über die gesamte Länge der Palisade der erstreckende Vertiefung ausgebildet, wobei sich die Umfangsfläche des Kopfes bis in die Vertiefung hinein erstreckt. Auf diese Weise ist die Umfangsfläche des Kopfes um den in die Vertiefung hineinreichenden Abschnitt vergrößert, wodurch erreicht ist, daß das von dem Kopf und einer mit diesem in Eingriff stehenden Aufnahme gebildete Gelenk über einen ausreichend großen Winkelbereich verstellt werden kann.

Die entgegengesetzte 2. Sicht- oder Wandfläche ist im wesentlichen eben ausgebildet und geht glatt und stufenlos in die Umfangsfläche des Kopfes über, ohne daß Nuten, Ausnehmungen oder Vorsprünge vorgesehen sind. Wenn der Kopf eine stetig gekrümmte Umfangsfläche besitzt, verläuft die 2.

Sicht- oder Wandfläche vorzugsweise tangential zu der Umfangsfläche des Kopfes. Da auf der 2. Sicht- oder Wandfläche keine Vertiefung ausgebildet ist, ist zwar der Winkelbereich, über den das Gelenk verstellt werden kann, beschränkt, jedoch ist dadurch erreicht, daß auf einer Seite einer aus erfindungsgemäßen Palisaden zusammengesetzten Wand eine durchgehende, optisch ungestörte Wandoberfläche ausgebildet werden kann, ohne daß die Wandoberfläche von einer Vielzahl von Ausnehmungen oder Vorsprüngen unterbrochen ist. Darüber hinaus ermöglicht die unterschiedliche Ausgestaltung der beiden Sicht- oder Wandflächen der Palisade eine deutliche Erhöhung der Gestaltungsmöglichkeiten für den Benutzer, da in Abhängigkeit von der gegenseitigen Ausrichtung benachbarter Palisaden unterschiedliche Wanddesigns erzielt werden.

In bevorzugter Ausgestaltung der Erfindung ist die Vertiefung auf der 1. Sicht- oder Wandfläche im wesentlichen mittig angeordnet.

In einer möglichen Ausführungsform ist vorgesehen, daß die Vertiefung einen im wesentlichen parallel zur 2. Sicht- oder Wandfläche verlaufenden Vertiefungsgrund und schräg dazu verlaufende Seitenwände aufweist, von denen eine Teil der Umfangsfläche des Kopfes ist. Dabei ist die Vertiefung im Querschnitt im wesentlichen konkav ausgebildet und geht glatt und stetig in die 1. Sicht- oder Wandfläche und die Umfangsfläche des Kopfes über. Auf diese Weise sind auf der 1. Sicht- oder Wandfläche keine Absätze, Ecken oder Kanten vorhanden, womit der Vorteil verbunden ist, daß in der Palisade punktuell hohe Kerbspannungen vermieden sind. Darüber hinaus kann sich auf der 1. Sicht- oder Wandfläche kein Schmutz in Ecken etc. ansammeln und die Palisade läßt sich gegebenenfalls in einfacher Weise reinigen.

In einer weiteren Ausgestaltungsmöglichkeit ist vorgesehen, daß der Kopf und die Aufnahme jeweils mittig auf der jeweiligen Stirnseite ausgebildet sind, wobei sie in ihrer Breite vorzugsweise dem gegenseitigen Abstand der beiden Sicht- oder Wandflächen entsprechen. Jedoch können auch breitere oder schmalere Köpfe sowie insbesondere eine schmalere Aufnahme vorgesehen sein.

Die Umfangsfläche des Kopfes sollte sich über einen Winkelbereich von ca. 180° bis 225° erstrecken. Dabei kann vorgesehen sein, daß der Kopf einen teilkreisförmig konvexen Querschnitt aufweist, alternativ kann der Kopf jedoch auch einen polygonförmigen Querschnitt insbesondere in Form eines regelmäßigen Vielecks besitzen. Der glatte, stufenlose Übergang zwischen der 2. Sicht- oder Wandfläche und der Umfangsfläche des Kopfes ist in diesem Fall dadurch erreicht, daß entweder eine der Umfangs-Teilflächen des Kopfes Bestandteil der 2. Sicht- oder Wandfläche ist oder die Umfangsfläche des Kopfes unter einer Abwinkelung an die 2. Sicht- oder Wandfläche anschließt. Dabei können der Kopf und Aufnahme zwar nur in vorbestimmten Relativstellungen angeordnet werden, besitzen jedoch einen besseren und insbesondere drehfesten Eingriff. Die teilkreisförmige Ausgestaltung des Kopfes und der Aufnahme ermöglichen hingegen eine stufenlose Winkelverstellung zwischen benachbarten Palisaden.

Die Aufnahme, die an der dem Kopf entgegengesetzten Stirnseite ausgebildet ist, weist eine der Ausgestaltung des Kopfes komplementäre Ausgestaltung auf. Vorzugsweise ist die Aufnahme als Hohlkehle ausgebildet, die entsprechend der Kopfgestaltung entweder einen teilkreisförmigen konkaven Querschnitt oder einen polygonförmigen Querschnitt besitzt. Dabei weist die Aufnahme eine Umrißlinie über einen Winkelbereich von ca. 90° auf.

Gemäß der Erfindung ist vorgesehen, daß die Sicht- oder Wandflächen in ihrem der Aufnahme zugewandten Endbereich zur Mitte der Palisade hin eingezogen sind, so daß die Breite der Aufnahme geringer als der gegenseitige Abstand der Sicht- oder Wandflächen ist. Auf diese Weise ist einerseits eine scharfe Kante zwischen der Aufnahme und der jeweiligen Sicht- oder Wandflächen gebildet, die in der extrem abgewinkelten Stellung zweier benachbarter Palisaden ein kollisionsfreies Eintauchen in die Vertiefung ermöglicht. Andererseits kann durch das endseitige Einziehen der Sicht- oder Wandflächen die Breite der Aufnahme verringert werden, so daß benachbarte Palisaden über einen größeren Winkelbereich verstellt werden können. Um dabei Abstufungen oder Unregelmäßigkeiten auf den Sicht- oder Wandflächen der Palisaden zu vermeiden oder zumindest gering zu halten, gehen die eingezogenen Endbereiches glatt, beispielsweise in stetiger Krümmung, in die jeweilige Sicht- oder Wandfläche über.

Insbesondere ist dabei vorgesehen, daß die 1. Sicht- oder Wandfläche ausgehend von ihrem eingezogenen Endbereich einen konvex gekrümmte Abschnitt aufweist, der stetig in die konkav gekrümmte Vertiefung übergeht, an die sich stetig die konvex gekrümmte Umfangsfläche des Kopfes anschließt. Die Umfangsfläche des Kopfes geht glatt und stetig in die 2. Sicht- oder Wandfläche über, die an ihrem aufnahmeseitigen Ende glatt in den eingezogenen Endbereich übergeht. Auf diese Weise ist die Oberfläche der Palisade zwischen den beiden Kanten der eingezogenen Endabschnitte, d.h. den beiden Sicht- oder Wandflächen und der kopfseitigen Stirnseite, ohne Abstufungen oder Abwinkelungen in stetigem, kontinuierlichem, glattem Verlauf ausgestaltet, wodurch Kerbspannungen vermieden sind und die Gefahr der Ansammlung von Schmutz wesentlich verringert ist.

Üblicherweise besteht die Palisade aus Beton und weist über seine Länge einen im wesentlichen konstanten Querschnitt auf, wobei es je nach Größe der aufzunehmenden Lasten unbewehrt oder bewehrt ausgebildet sein kann.

Weitere Einzelheiten und Merkmale der Erfindung sind aus der folgenden Beschreibung von Ausführungsbeispielen unter Bezugnahme auf die Zeichnung ersichtlich. Es zeigen:
- Figur 1: einen Querschnitt durch eine stabförmige Palisade,
- Figur 2: zwei Palisaden gemäß Fig. 1 in gegenseitigem Eingriff und in gradliniger Ausrichtung und
- Figur 3: verschiedene Palisaden gemäß Fig. 1 in gegenseitigem Eingriff unter Bildung von Abwicklungen.

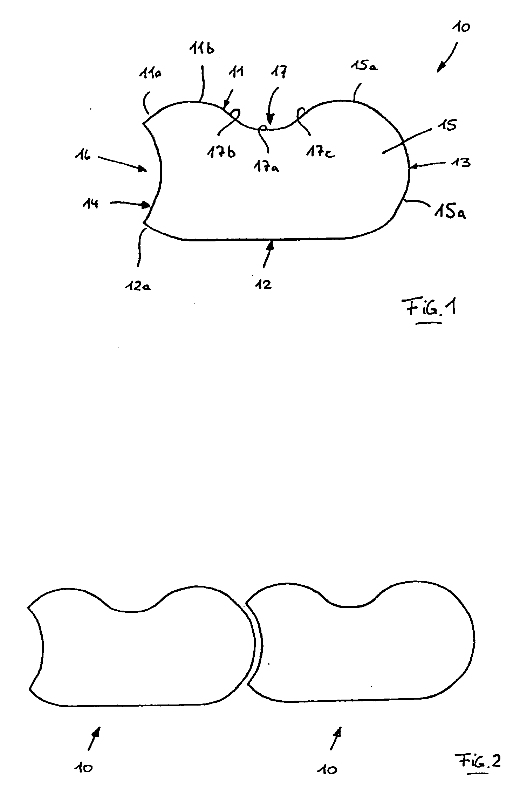

Eine in Fig. 1 im Querschnitt dargestellte Palisade aus Beton und weist über ihre Länge, d.h. senkrecht zur Zeichenebene, einen im wesentlichen gleichbleibenden Querschnitt auf. Sie besitzt eine 1. Sicht- oder Wandfläche 11 und auf der entgegengesetzten Seite eine 2. Sicht- oder Wandfläche 12, die im wesentlichen eben ausgebildet ist. An den seitlichen Enden der beiden Sicht- oder Wandflächen 11, 12 erstrecken sich zwischen diesen entgegengesetzte Stirnseiten 13 und 14.

Die gemäß Fig. 1 rechte Stirnseite 13 ist als ein Kopf 15 ausgeformt, der einen teilkreisförmigen Querschnitt besitzt und dessen Mittelpunkt etwa in der Mitte des gegenseitigen Abstandes der beiden Sicht- oder Wandflächen 11 und 12 liegt. Im dargestellten Ausführungsbeispiel entspricht der Radius des Kopfes 15 im wesentlichen der halben Breite der Palisade, d.h. dem halben Abstand der beiden Sicht- oder Wandflächen 11 und 12, so daß der Kopf 15 mit seiner Umfangsfläche 15a glatt und im wesentlichen tangential in die ebene 2. Sicht- oder Wandfläche 12 übergeht.

Auf der 1. Sicht- oder Wandfläche 11 ist eine im wesentlichen mittig angeordnete Vertiefung 17 ausgebildet, die einen im wesentlichen parallel zur 2. Sicht- oder Wandfläche 11 verlaufenden Vertiefungsgrund 17a und schräg verlaufende Seitenwände 17b und 17c aufweist, wobei die Seitenwand 17c gleichzeitig Teil der Umfangsfläche 15a des Kopfes 15 ist. Dabei sind die Übergänge zwischen den Seitenwänden 17b und 17c und dem Vertiefungsgrund 17a so ausgerundet, daß die Vertiefung 17 einen konkaven Querschnitt besitzt und glatt und auf ihrer einen Seite stetig in die Umfangsfläche 15a des Kopfes übergeht. Auf diese Weise ist erreicht, daß sich die Umfangsfläche 15a des Kopfes 15 bis in die Vertiefung 17 hinein und über einen Winkelbereich von mehr als 180°, im dargestellten Ausführungsbeispiel über ca. 225° erstreckt.

Auf der entgegengesetzten Stirnseite 14 ist eine als Hohlkehle ausgebildete Aufnahme 16 vorgesehen, deren Krümmungsradius dem Radius des Kopfes 15 entspricht und deren konkave Umfangsfläche sich über einen Öffnungswinkel von ca. 90° erstreckt.

Die beiden Sicht- oder Wandflächen 11 und 12 sind in ihren der Aufnahme 16 zugewandten Endbereichen 11a, 12a unter stetiger Krümmung der Sicht- oder Wandflächen 11 und 12 zur Mitte der Palisade 10 hin eingezogen, so daß die Breite der Aufnahme 16 um ein geringes Maß, beispielsweise ca. 10%, geringer als der gegenseitige Abstand der Sicht- oder Wandflächen 11 und 12 ist. Darüber hinaus ist im Eckbereich zwischen der jeweiligen Sicht- oder Wandfläche 11 bzw. 12 und der konkaven Umfangsfläche der Aufnahme 16 eine spitzwinklige Kante gebildet. Auf diese Weise ist erreicht, daß die 1. Sicht- oder Wandfläche 11 ausgehend von ihrem eingezogenen Endbereich 11a einen im Querschnitt konvex gekrümmten Abschnitt 11b aufweist, der stetig in die konkav gekrümmte Vertiefung 17 übergeht, an die sich stetig die konvex gekrümmte Umfangsfläche 15a des Kopfes anschließt. Die stetig konvex gekrümmte Umfangsfläche des Kopfes geht ihrerseits glatt und stetig in die 2. Sicht- oder Wandfläche 12 über, die an ihrem aufnahmeseitigen Ende unter stetiger Krümmung glatt in den eingezogenen Endbereich 12a übergeht.

Wie in Fig. 2 dargestellt ist, werden zum Aufbau einer Palisadenwand mehrere Palisaden 10 nebeneinander angeordnet, wobei der Kopf einer Palisade in die Aufnahme der benachbarten Palisaden eingreift und die einander zugewandten Stirnseiten der benachbarten Palisaden in Anlage kommen. Dabei ist auf der Vorderseite eine im wesentlichen glatte, lediglich durch den Einzug der Endbereiche 11a, 12a unterbrochene Oberfläche gebildet.

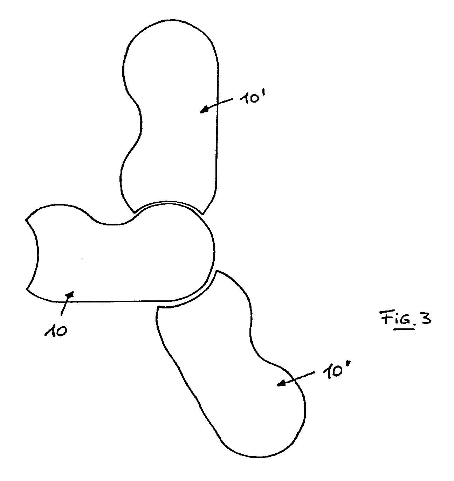

Da sich die Aufnahme 16 nur über einen Winkelbereich von ca. 90° erstreckt, der Kopf 15 jedoch eine Umfangsfläche über einen Bereich von ca. 225° aufweist, können nebeneinander angeordnete Palisaden über einen Winkelbereich von ca. 135° in beliebiger Ausrichtung zueinander angeordnet werden, wobei jeweils der Kopf in der Aufnahme liegt. Auf diese Weise können Abwinkelungen zwischen benachbarten Palisaden über einen großen Winkelbereich realisiert werden. zwei mögliche Abwinkelungen zweier benachbarter Palisaden sind in Fig. 3 dargestellt. Dabei zeigt die obere Palisade 10' die obere maximal abgewinkelte Position, in der die zwischen der Sicht- oder Wandfläche 12 und der Aufnahme 16 gebildete spitzwinklige Ecke in der Vertiefung 17 der anderen Palisade 10 angeordnet ist. Die des Weiteren dargestellte abgewinkelte Palisade 10'' ist in der anderen Extremstellung angeordnet, in der die Ecke zwischen der ersten Sicht- oder Wandfläche 11 und der Aufnahme 16 im Übergang zwischen der Umfangsfläche des Kopfes 15 und der ersten Sicht- oder Wandfläche 11 der anderen Palisade 10 liegt.

## Patentansprüche

1. Palisade mit auf entgegengesetzten Seiten angeordneten Sicht- oder Wandflächen (11, 12) und dazwischenliegenden Stirnseiten (13, 14),
wobei auf einer der Stirnseiten (13) ein vorstehender Kopf (15) und auf der anderen Stirnseite (14) eine Aufnahme (16) ausgebildet ist und der Kopf (15) und die Aufnahme (16) bei der Bildung einer Wand mit einer Aufnahme bzw. einem Kopf einer benachbarten Palisade in Eingriff tritt, und
wobei auf einer 1. Sicht- oder Wandfläche (11) eine sich über die gesamte Länge der Palisade erstreckende Vertiefung (17) ausgebildet ist und sich die Umfangsfläche (15a) des Kopfes (15) bis in die Vertiefung (17) hinein erstreckt und die Sicht- oder Wandflächen (11,12) in ihrem der Aufnahme (16) zugewandten Endbereich (11a,12a) zur Mitte der Palisade eingezogen sind, so daß die Breite der Aufnahme (16) geringer als der gegenseitige Abstand der Sicht- oder wandflächen (11,12) ist,
**dadurch gekennzeichnet, daß**
die entgegengesetzte 2. Sicht- oder Wandfläche (12) im wesentlichen eben ausgebildet ist und glatt in die Umfangsfläche (15a) des Kopfes (15) übergeht,
wobei die 1. Sicht- oder Wandfläche (11) ausgehend von ihrem der Aufnahme (16) zugewandten Endbereich (11a) einen konvex gekrümmten Abschnitt (11b) aufweist, der stetig in die konkav gekrümmte Vertiefung (17) übergeht, an die sich stetig die konvex gekrümmte Umfangsfläche (15a) des Kopfs (15) anschließt,
daß die eingezogenen Endbereiche (11, 12a) gekrümmt in die Sicht- oder Wandflächen (11,12) übergehen und
daß die Aufnahme (16) sich über einen Winkel von ca. 90° erstreckt.

2. Palisade nach Anspruch 1, **dadurch gekennzeichnet, daß** die Vertiefung (17) auf der 1. Sicht- oder Wandfläche (11) im wesentlichen mittig angeordnet ist.

3. Palisade nach Anspruch 1 oder 2, **dadurch gekennzeichnet, daß** die Vertiefung (17;19) einen im wesentlichen parallel zur 2. Sicht- oder Wandfläche (12) verlaufenden Nutgrund (17a) und schräg verlaufende Seitenwände (17b,17c) aufweist, von denen eine (17c) Teil der Umfangsfläche (15a) des Kopfes (15) ist.

4. Palisade nach einem der Ansprüche 1 bis 3, **dadurch gekennzeichnet, daß** sich die Umfangsfläche (15a) des Kopfes (15) über einen Winkelbereich von ca. 180° bis 225° erstreckt.

5. Palisade nach einem der Ansprüche 1 bis 4, **dadurch gekennzeichnet, daß** der Kopf (15) einen teilkreisförmig konvexen Querschnitt aufweist.

6. Palisade nach Anspruch 5, **dadurch gekennzeichnet, daß** die 2. Sicht- oder Wandfläche (12) tangential in die Umfangsfläche (15a) des Kopfes (15) übergeht.

7. Palisade nach einem der Ansprüche 1 bis 4, **dadurch gekennzeichnet, daß** der Kopf (15) einen polygonförmigen Querschnitt insbesondere in Form eines regelmäßigen Vielecks aufweist.

8. Palisade nach einem der Ansprüche 1 bis 7, **dadurch gekennzeichnet, daß** der Kopf (15) und die Aufnahme (16) jeweils mittig auf der jeweiligen Stirnseite (13, 14) ausgebildet sind.

9. Palisade nach einem der Ansprüche 1 bis 8, **dadurch gekennzeichnet, daß** die Aufnahme (16) eine Hohlkehle ist.

10. Palisade nach einem der Ansprüche 1 bis 9, **dadurch gekennzeichnet, daß** die Aufnahme (16) einen teilkreisförmig konkaven Querschnitt aufweist.

11. Palisade nach einem der Ansprüche 1 bis 10, **dadurch gekennzeichnet, daß** die Aufnahme (16) einen polygonförmigen Querschnitt aufweist.

12. Palisade nach einem der Ansprüche 1 bis 11, **dadurch gekennzeichnet, daß** sie aus Beton besteht.

## Claims

1. Palisade with exposed or wall surfaces (11, 12), located on opposite sides, and intermediate faces (13, 14), a projecting head (15) being formed on one of the faces (13) and a receptacle (16) on the other of the faces (14) and the head (15) and receptacle (16) when forming a wall engage with a receptacle or head of an adjacent palisade and on a first exposed or wall surface (11) is formed a depression (17) extending over the entire length of the palisade and the circumferential surface (15a) of the head (15) extends into the depression (17) and the exposed or wall surfaces (11, 12) in their end region (11a, 12a) facing the receptacle (16) are retracted towards the centre of the palisade, so that the width of the receptacle (16) is smaller than the mutual spacing of the exposed or wall surfaces (11, 12), **characterized in that** the opposite second exposed or wall surface (12) is substantially planar and passes flush into the circumferential surface (15a) of the head (15), the first exposed or wall surface (11), starting from its end region (11a) facing the receptacle (16), has a convexly curved portion (11b), which passes in a continuous manner into the concavely curved depression (17), to which is continuously connected the convexly curved circumferential surface (15a) of the head (15), that the retracted end regions (11, 12a) pass in curved manner into the exposed or wall surfaces (11, 12) and that the receptacle (16) extends over an angle of approximately 90°.

2. Palisade according to claim 1, **characterized in that** the depression (17) on the first exposed or wall surface (11) is positioned substantially centrally.

3. Palisade according to claim 1 or 2, **characterized in that** the depression (17, 19) has a groove base (17a) running substantially parallel to the second exposed or wall surface (12) and inclined side walls (17b, 17c), whereof one (17c) is part of the circumferential surface (15a) of the head (15).

4. Palisade according to one of the claims 1 to 3, **characterized in that** the circumferential surface (15a) of head (15) extends over an angular range from approximately 180 to 225°.

5. Palisade according to one of the claims 1 to 4, **characterized in that** the head (15) has a pitch circular convex cross-section.

6. Palisade according to claim 5, **characterized in that** the second exposed or wall surface (12) passes tangentially into the circumferential surface (15a) of the head (15).

7. Palisade according to one of the claims 1 to 4, **characterized in that** the head (15) has a polygonal cross-section, particularly in the form of a regular polygon.

8. Palisade according to one of the claims 1 to 7, **characterized in that** the head (15) and the receptacle (16) are in each case formed centrally on the particular face (13, 14).

9. Palisade according to one of the claims 1 to 8, **characterized in that** the receptacle (16) is a fillet.

10. Palisade according to one of the claims 1 to 9, **characterized in that** the receptacle (16) has a pitch circular concave cross-section.

11. Palisade according to one of the claims 1 to 10, **characterized in that** the receptacle (16) has a polygonal cross-section.

12. Palisade according to one of the claims 1 to 11, **characterized in that** it is made from concrete.

## Revendications

1. Elément de palissade comportant des surfaces apparentes ou de paroi (11,12) et des faces frontales (13,14) disposées entre elles,
dans lequel une tête (15) en saillie est conformée sur l'une des faces frontales (13) et un logement (16) sur l'autre face frontale (14), et dans laquelle la tête (15) et le logement (16) viennent en prise avec un logement ou une tête d'un élément de palissade adjacent pour constituer une cloison, et
dans lequel un enfoncement (17) s'étendant sur toute la longueur de l'élément de palissade est conformé sur une première surface apparente ou de paroi (11) et la surface périphérique (15a) de la tête (15) s'étend jusqu'à l'intérieur de l'enfoncement (17) et les surfaces apparentes ou de paroi (11,12) sont rétrécies vers le milieu de l'élément de palissade au niveau de leurs zones d'extrémité (11a, 12a) en regard du logement (16), de sorte que la largeur du logement (16) est inférieure à la distance séparant les surfaces apparentes ou de paroi (11,12) les unes des autres,
**caractérisé en ce que** la deuxième surface apparente ou de paroi (12) opposée est conformée sensiblement plane et se prolonge de manière uniforme dans la surface périphérique (15a) de la tête (15), dans lequel la première surface apparente ou de paroi (11) présente en partant de sa zone d'extrémité (11a) en regard du logement (16) un segment (11b) à courbure convexe qui se prolonge de manière régulière dans l'enfoncement (17) à courbure concave qui se prolonge de manière régulière par la surface périphérique (15a) à courbure convexe de la tête (15),
**en ce que** les zones d'extrémité (11, 12a) rétrécies s'incurvent en surfaces apparentes ou de paroi (11,12) et
**en ce que** le logement (16) s'étend sur un angle d'environ 90°.

2. Elément de palissade selon la revendication 1, **caractérisé en ce que** l'enfoncement (17) de la première surface apparente ou de paroi (11) est disposé sensiblement au milieu.

3. Elément de palissade selon la revendication 1 ou 2, **caractérisé en ce que** l'enfoncement (17,19) présente un fond de gorge (17a) s'étendant sensiblement parallèle à la deuxième surface apparente ou de paroi (12) et des parois latérales (17b, 17c) s'étendant de manière oblique, dont l'une (17c) fait partie de la surface périphérique (15a) de la tête (15).

4. Elément de palissade selon l'une quelconque des revendications 1 à 3, **caractérisé en ce que** la surface périphérique (15a) de la tête (15) s'étend sur une zone angulaire d'environ 180 à 225°.

5. Elément de palissade selon l'une quelconque des revendications 1 à 4, **caractérisé en ce que** la tête (15) présente une section convexe en arc.

6. Elément de palissade selon la revendication 5, **caractérisé en ce que** la deuxième surface apparente ou de paroi (12) passe de manière tangentielle dans la surface périphérique (15a) de la tête (15).

7. Elément de palissade selon l'une quelconque des revendications 1 à 4, **caractérisé en ce que** la tête (15) présente une section de forme polygonale, notamment celle d'un polygone régulier.

8. Elément de palissade selon l'une quelconque des revendications 1 à 7, **caractérisé en ce que** la tête (15) et le logement (16) sont chacun conformés au milieu de la face frontale respective (13,14).

9. Elément de palissade selon l'une quelconque des revendications 1 à 8, **caractérisé en ce que** le logement (16) est une cannelure.

10. Elément de palissade selon l'une quelconque des revendications 1 à 9, **caractérisé en ce que** le logement (16) présente une section concave en arc.

11. Elément de palissade selon l'une quelconque des revendications 1 à 10, **caractérisé en ce que** le logement (16) présente une section polygonale.

12. Elément de palissade selon l'une quelconque des revendications 1 à 11, **caractérisé en ce qu'**il est en béton.
